# EUROPEAN PATENT APPLICATION

(11) **EP 2 543 857 A1**
(43) Date of publication of application: **09.01.2013**
(21) Application number: 12174301.7
(22) Date of filing: 29.06.2012
(51) Int. Cl.: F02D 41/22, F02D 41/18, F02M 25/07, F02D 21/08

(54) **Systems for evaluating possible abnormality in an engine**

(30) Priority: 06.07.2011 JP 2011149916
(71) Applicant: Kabushiki Kaisha Toyota Jidoshokki, Kariya-shi, Aichi 448-8671 (JP)
(72) Inventor: Nishimura, Naoki, Kariya-shi, Aichi 448-8671 (JP)
(74) Representative: TBK

(57) **Abstract**

Embodiments of the present invention may include a system for evaluating a possible abnormality in an engine (2). The system includes an engine (2), an EGR passage (4, 5) and an ECU (6). The rotational speed of the engine (2) is preferably calculated based on a crank angle. The ECU (6) preferably calculates a flow rate of gas in an engine (2) cylinder based on the rotational speed of the engine (2), a temperature detected by a temperature sensor (12a) and a pressure detected by a pressure sensor (12b). The ECU (6) calculates a flow rate of the EGR gas on basis of a differential pressure between an upstream and a downstream of an EGR valve (32, 42) and an degree of opening of the EGR valve (32, 42). The ECU (6) calculates a difference between a reference value of a flow rate of a new gas and a detection value of the flow rate of a new gas. The reference value is obtained by subtracting the calculated flow rate of the EGR gas from the calculated flow rate of the cylinder flowing gas. The detection value is detected by an air flow meter (16). The ECU (6) judges whether the air flow meter (16) is acting abnormally when the difference between a reference value of a flow rate of a new gas is equal to or more than a predetermined value.

## Description

This application claims priority to Japanese patent application serial number 2011-149916, the contents of which are incorporated herein by reference.
The present invention relates to a system for evaluating whether an abnormality exists in an engine. In detail, the present invention relates to improved air flow meter abnormality detection systems. An air flow meter may be capable of detecting the flow rate of a new gas to be taken into an engine provided with an EGR passage.

A detection value of the flow rate of a new gas from an air flow meter has been conventionally used not only for controlling fuel injection but also for controlling a post-processing device or an EGR (Exhaust Gas Recirculation). Japanese Laid-Open Patent Publication 2004-100516 discloses a system using an air flow meter for detecting abnormalities. Specifically, in the system, an ECU (Engine Control Unit) calculates a target EGR valve degree of opening in accordance with a drive condition of an engine (the temperature of an engine, the rotational speed of an engine, the fuel injection amount, etc.) on the basis of a pre-determined map. The ECU sets a reference value for the flow rate of a new gas. The ECU compares the reference value of the flow rate of the new gas with a detection value of the flow rate of the new gas detected by means of the air flow meter. The ECU judges the air flow meter to be abnormal when a difference between the values is large. The system may help to deter negative effects on exhaust performance.

The reference value of the flow rate of the new gas is set on the basis of a target intake air flow rate controlling valve degree of opening, a target exhaust gas flow rate controlling valve degree of opening and a target EGR valve degree of opening, which are calculated in accordance with the drive condition of an engine. This, however, requires many parameters used for setting the reference value of the flow rate of the new gas. The reference value of the flow rate of the new gas greatly varies in accordance with fluctuations in the conditions of an engine. Accordingly, the accuracy of the reference value of the flow rate of the new gas is deteriorated in some cases even when the reference value of the flow rate of the new gas is set.

Moreover, the amount of the EGR gas re-circulated to the engine can be only estimated on the basis of the drive condition of the engine and the target EGR degree of opening. Thus, the estimated accuracy may not be very accurate in some cases. Therefore, a wide margin in the abnormality detection for the threshold value is often used to prevent errors. This, however, reduces the accuracy of the abnormality detection of the air flow meter in some cases. Thus, there is a need for a system capable of improving the accuracy in the abnormality judgment of an air flow meter.

Embodiments of the present invention include a system for evaluating a possible abnormality in an engine. The system may include an engine, an EGR passage, an air flow meter, an EGR valve, a crank angle sensor, a temperature sensor, a pressure sensor, a differential pressure sensor and an ECU. The engine includes an exhaust system and an intake system. The EGR passage re-circulates a portion of exhaust gas as an EGR gas from the exhaust system to the intake system. The air flow meter is capable of detecting a flow rate of a new gas taken into the engine as a detection value. The EGR valve is capable of adjusting a flow rate of the EGR gas flowing in the EGR passage. The crank angle sensor is capable of detecting a crank angle for calculating a rotational speed of the engine. The temperature sensor is capable of detecting the temperature of gas flowing into an engine cylinder. The pressure sensor is capable of detecting pressure of the gas flowing into the engine cylinder. The differential pressure sensor is capable of detecting the differential pressure between an upstream side and a downstream side of the EGR valve. The rotational speed of the engine may be calculated based on a crank angle. The ECU calculates a flow rate of gas into the engine cylinder based on the rotational speed of the engine, a temperature detected by the temperature sensor and a pressure detected by the pressure sensor. The ECU calculates a flow rate of the EGR gas based on the differential pressure detected by the differential pressure sensor and a degree of opening of the EGR valve. The ECU calculates a difference between a reference value of an another flow rate of the new gas and the detection value. The reference value is obtained by subtracting the calculated flow rate of the EGR gas from the calculated flow rate of the cylinder flowing gas. The ECU judges whether the air flow meter is acting abnormally when the calculated difference is equal to or more than a predetermined value.

In accordance with the configuration, the reference value of the flow rate of a new gas is calculated by subtracting the flow rate of the EGR gas from the flow rate of the gas into the engine cylinder. In this case, the flow rate of the EGR gas is directly calculated on the basis of the differential pressure detected by the differential pressure sensor and the degree of opening of the EGR valve. This causes the accuracy of the calculated reference value of the flow rate of a new gas to be higher than that of the technology of prior art (Japanese Laid-Open Patent Publication 2004-100516). As a result, the accuracy in the abnormality detection capability of an air flow meter can be improved.

Additional objects, features, and advantages, of the present invention will be readily understood after reading the following detailed description together with the claims and the accompanying drawings, in which:
FIG. 1 is a configuration diagram of a system for detecting the presence of an abnormality in an engine in accordance with an embodiment of the present invention;
FIG. 2 is a flowchart of the system for detecting the presence of an abnormality in FIG. 1; and
FIG. 3 is a diagram for showing a relationship between boost pressure and a flow rate of gas in an engine cylinder.

Each of the additional features and teachings disclosed above and below may be utilized separately or in conjunction with other features and teachings to provide improved systems for evaluating a possible abnormality in an engine. Representative examples of the present invention, which utilize many of these additional features and teachings both separately and in conjunction with one another, will now be described in detail with reference to the attached drawings. This detailed description is merely intended to teach a person of ordinary skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful configurations of the present teachings.

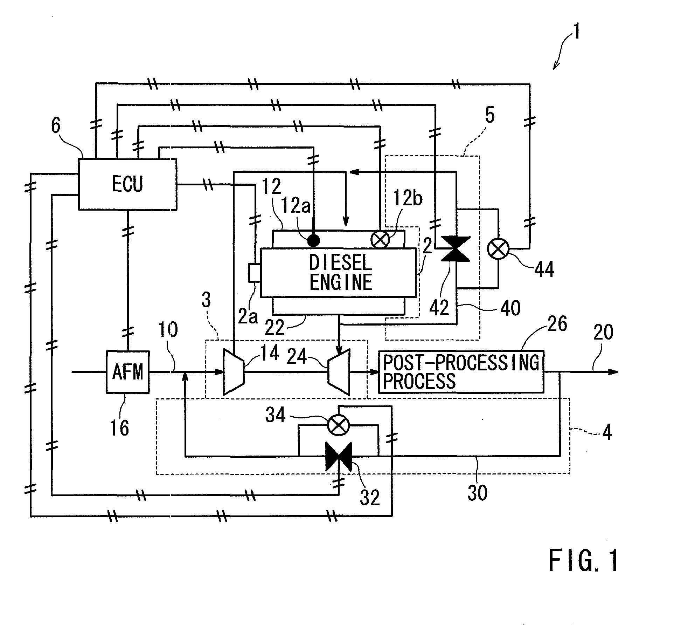

FIG. 1 shows a structure of a system for evaluating a possible abnormality 1 in a diesel engine 2 in accordance with an embodiment of the invention. The system for evaluating a possible abnormality 1 preferably includes a diesel engine 2, a turbo charger 3, a low-pressure EGR passage 4 and a high-pressure EGR passage 5.

As shown in FIG. 1 an intake portion of the diesel engine 2 may be connected to an intake system. The intake system preferably includes an intake manifold 12 connected to the diesel engine 2 and an intake tube 10 connected to the intake manifold 12. The intake manifold 12 is preferably provided with an intake temperature sensor 12a and a boost pressure sensor 12b. The intake temperature sensor 12a is capable of detecting a temperature of the inside of the intake manifold 12. The boost pressure sensor 12b is capable of detecting a boost pressure of the inside of the intake manifold 12. The intake tube 10 is provided with an air flow meter 16 capable of detecting the flow rate of a new gas taken in.

An exhaust portion of the diesel engine 2 is preferably connected to an exhaust system. The exhaust system preferably includes an exhaust manifold 22 connected to the diesel engine 2 and an exhaust tube 20 connected to the exhaust manifold 22. The exhaust tube 20 is preferably provided with a post-process device 26 capable of purifying an exhaust gas exhausted from the diesel engine 2. The diesel engine 2 is preferably provided with a crank angle sensor 2a capable of detecting a crank angle of the diesel engine 2.

As shown in FIG. 1 the turbo charger 3 preferably comprises a compressor 14 and a turbine 24. The compressor 14 may be provided in the intake tube 10. The turbine 24 is preferably connected to the compressor 14 and provided in the exhaust tube 20. Exhaust gas exhausted from the diesel engine 2 drives the turbine 24. The driving force of the turbine 24 is transmitted to the compressor 14. This can supercharge the new gas in the intake tube 10.

The compressor 14 is preferably provided on a downstream side of the air flow meter 16. The turbine 24 is preferably provided on an upstream side of the post-process device 26.

The low-pressure EGR passage 4 comprises low-pressure EGR piping 30, a low-pressure EGR valve 32 and a differential pressure sensor 34. One end of the low-pressure EGR piping 30 is preferably connected to the intake tube 10 between the air flow meter 16 and the compressor 14. The other end of the low-pressure EGR piping 30 is preferably connected to the exhaust tube 20 on a downstream of the post-process device 26. An exhaust gas in the exhaust tube 20 may turn into a new gas in the intake tube 10. That is to say, so-called re-circulation of an exhaust gas can be achieved.

The low-pressure EGR valve 32 is capable of adjusting the flow rate of the exhaust gas in the low-pressure EGR piping 30 and a portion of the exhaust gas turns into the intake tube 10. The differential pressure sensor 34 is capable of detecting the differential pressure between an upstream side and a downstream side of the low-pressure EGR valve 32.

The high-pressure EGR passage 5 preferably comprises high-pressure EGR piping 40, a high-pressure EGR valve 42 and a differential pressure sensor 44. One end of the high-pressure EGR piping 40 is preferably connected to the intake tube 10 between the compressor 14 and the intake manifold 12. The other end of the high-pressure EGR piping 40 is preferably connected to the exhaust tube 20 on an upstream side of the turbine 24. An exhaust gas in the exhaust tube 20 may turn into a new gas in the intake tube 10. That is to say, re-circulation of the exhaust gas can be achieved.

The high-pressure EGR valve 42 is preferably capable of adjusting the flow rate of the exhaust gas in the high-pressure EGR piping 40 as a portion of the exhaust gas turns into the intake tube 10. The differential pressure sensor 44 is capable of detecting the differential pressure between an upstream side and a downstream side of the high-pressure EGR valve 42.

The system for detecting a possible abnormality 1 is provided with an ECU 6 forming a control device. The ECU 6 is preferably electrically connected to the crank angle sensor 2a. This allows the ECU 6 to calculate the rotational speed of the diesel engine 2. The ECU 6 may be electrically connected to the intake temperature sensor 12a. This allows the ECU 6 to detect the temperature of the gas in the intake manifold 12. The gas in the intake manifold 12 flows into the engine cylinder(s).

The ECU 6 may be electrically connected to the boost pressure sensor 12b. This allows the ECU 6 to detect the boost pressure of the gas in the intake manifold 12. The ECU 6 is preferably electrically connected to the air flow meter 16. This allows the ECU 6 to detect the flow rate of a new gas in the intake tube 10. The ECU 6 is preferably electrically connected to the low-pressure EGR valve 32. This allows the ECU 6 to properly control the degree of opening of the low-pressure EGR valve 32.

The ECU 6 is preferably electrically connected to the differential pressure sensor 34. Accordingly, the ECU 6 can detect the differential pressure between the upstream side and the downstream side of the low-pressure EGR valve 32. The ECU 6 is also preferably electrically connected to the high-pressure EGR valve 42. This allows the ECU 6 to properly control the degree of opening of the high-pressure EGR valve 42. The ECU 6 is preferably electrically connected to the differential pressure sensor 44. This allows the ECU 6 to detect the differential pressure between the upstream side and the downstream side of the high-pressure EGR valve 42.

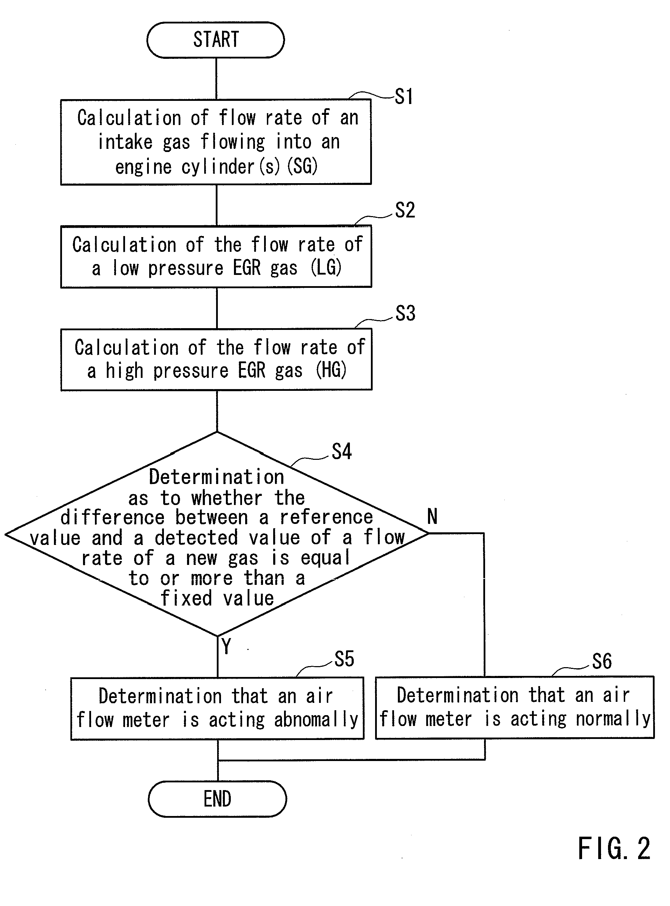

The ECU 6 in the system for evaluating a possible abnormality 1 operates the steps S 1 to S6 described in FIG. 2.

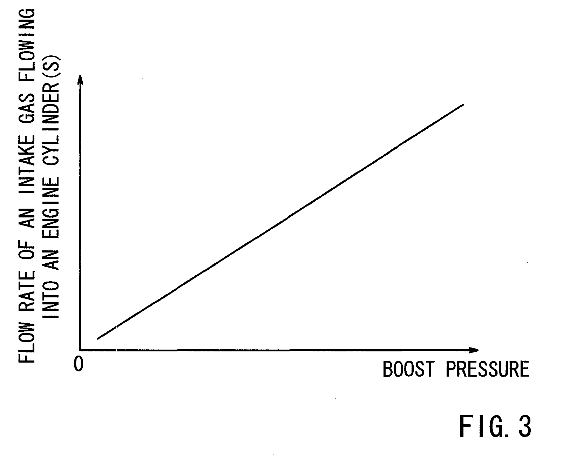

The ECU 6 first calculates the flow rate of an intake gas flowing into the engine cylinder(s) on the basis of the rotational speed of the diesel engine 2, its temperature and its pressure (step S1). The rotational speed of the diesel engine 2 can be calculated using the crank angle sensor 2a. The temperature is detected by the intake temperature sensor 12a. The pressure is detected by the boost pressure sensor 12b. The calculation is carried out in accordance with a two-dimensional map stored in the ECU 6 in advance (refer to FIG. 3).

The two-dimensional map is preferably set in plural numbers so as to correspond to the rotational speed of the engine. A line in the two-dimensional map is shifted up and down in accordance with the temperature of the gas. The lower the temperature of the gas, the lower the line is shifted in the map. The ECU 6 calculates the flow rate of the intake gas flowing into the engine cylinder(s) in accordance with the boost pressure of the intake gas in the intake manifold 12 by using the two-dimensional map corresponding to the rotational speed of the engine and the intake temperature.

The ECU 6 then calculates the flow rate of the low-pressure EGR gas on the basis of the differential pressure detected by the differential pressure sensor 34 and the degree of opening of the low-pressure EGR valve 32 (in a step S2). The calculation is carried out in accordance with a three-dimensional map (not shown) stored in the ECU 6. The ECU 6 calculates the flow rate of the low-pressure EGR gas by using the three-dimensional map using the differential pressure of the low-pressure EGR valve 32 and the degree of opening of the low-pressure EGR valve 32.

Following the above, the ECU 6 calculates the flow rate of the high-pressure EGR gas on the basis of the differential pressure detected by the differential pressure sensor 44 and the degree of opening of the high-pressure EGR valve 42 (in a step S3). The calculation is also carried out similar to the above-mentioned case which obtained the flow rate of the low-pressure EGR gas.

The ECU 6 calculates a reference value of the flow rate of a new gas by subtracting the sum of the flow rate of the low-pressure EGR gas and the flow rate of the high-pressure EGR gas from the flow rate of the intake gas. The flow rates are calculated in the steps S1, S2 and S3. The ECU 6 then calculates a difference between the reference value of the flow rate of a new gas and the detected value of the flow rate of a new gas detected by the air flow meter 16. The ECU 6 then judges whether or not the difference is equal to or more than a fixed value. For example, the ECU 6 judges whether or not the difference is within plus or minus a certain percentage of the reference value (in a step S4).

The ECU 6 determines that the air flow meter 16 is acting abnormally (in a step S5) when the judgment is YES in the step S4. The ECU 6 then ends the flowchart. On the other hand, the process goes to a step 6 when the judgment is NO in the step S4. When the ECU 6 judges that the air flow meter 16 is acting normally in accordance with the judgment, the flowchart ends. The respective steps are repeated during predetermined period(s).

The system for evaluating a possible abnormality 1 in the diesel engine 2 preferably has the structure described above. In order to calculate the flow rate of the new gas, the sum of the flow rate of the low-pressure EGR gas and the flow rate of the high-pressure EGR gas are deducted from the flow rate of the intake gas. The flow rate of the low-pressure EGR gas is calculated on the basis of the differential pressure detected by the differential pressure sensor 34 and the degree of opening of the low-pressure EGR valve 32. The flow rate of the high-pressure EGR gas is calculated on the basis of the differential pressure detected by the differential pressure sensor 44 and the degree of opening of the high-pressure EGR valve 42.

Thus, the flow rate of each EGR gas is directly calculated on the basis of the degree of opening of each of the EGR valves 32 and 42, and the differential pressure between both sides of the valves. Only the respective EGR valves 32 and 42 and the respective differential pressure sensors 34 and 44 are used in order to calculate the reference value of the flow rate of the new gas. Accordingly, the structure is simpler and the accuracy of the reference value of the flow rate of the new gas is higher than that of the prior art (Japanese Laid-Open Patent Publication 2004-100516). As a result, the accuracy in abnormality evaluation of the air flow meter 16 can be improved.

The system for evaluating a possible abnormality 1 preferably includes plural EGR passages 4 and 5. The ECU 6 judges whether the air flow meter 16 is abnormal only when one of the plural EGR passages 4 and 5 is operating. In accordance with the configuration, the reference value of the flow rate of a new gas can be easily calculated by a simple method even if plural EGR passages 4 and 5 are provided.

While the embodiments of invention have been described with reference to specific configurations, it will be apparent to those skilled in the art that many alternatives, modifications and variations may be made without departing from the scope of the present invention. Accordingly, embodiments of the present invention are intended to embrace all such alternatives, modifications and variations that may fall within the spirit and scope of the appended claims. For example, embodiments of the present invention should not be limited to the representative configurations, but may be modified, for example, as described below.

As described in the above embodiment, the air flow meter 16 may evaluate a possible abnormality while both the low-pressure EGR passage 4 and the high-pressure EGR passage 5 are simultaneously operated. Alternatively, an abnormality of the air flow meter 16 may be evaluated when only one of the low-pressure EGR passage 4 or the high-pressure EGR 5 passage is operated. Each of the calculations of the reference value of the flow rate of a new gas may be achieved by a simple method as in the above-described embodiment.

The engine may be a diesel engine 2 as described above. Alternatively, the engine may be a gasoline engine.

The system for evaluating a possible abnormality 1 may include use of both the low-pressure EGR passage 4 and the high-pressure EGR passage 5 as described above. Alternatively, the system may only use one of the low-pressure EGR passage 4 or high-pressure EGR passage 5.

The system for evaluating a possible abnormality 1 may include the turbo charger 3 as described above. Alternatively, the system may not include the turbo charger 3.

The intake temperature sensor 12a may be mounted to the intake manifold 12. Alternatively, the temperature sensor may be mounted to the intake tube 10 to estimate the temperature of the inside of the intake manifold 12. In this case, the ECU may estimate the temperature in the intake manifold 12 on the basis of mixture of EGR gas energy and new gas energy.

The boost pressure sensor 12b may be mounted to the intake manifold 12 as described above. Alternatively, the boost pressure sensor 12b may be mounted to the intake tube 10.

As described above the ECU 6 may judge that the air flow meter 16 is abnormal (in a step S5) when the difference between the reference value of the flow rate of a new gas and the detected value is equal to or more than a fixed value (in step S4). Alternatively, the ECU 6 may judge that the air flow meter 16 is abnormal when the reference value of the flow rate of a new gas does not coincide with a detected value of the flow rate of a new gas. In this case, an abnormality in the air flow meter 16 can be accurately detected.

## Claims

1. A system for evaluating a possible abnormality in an engine (2) comprising:
an engine (2) with an exhaust system and an intake system;
an EGR passage (4, 5) for re-circulating a portion of an exhaust gas as an EGR gas from the exhaust system to the intake system;
an air flow meter (16) capable of detecting a flow rate of a new gas taken into the engine (2) as a detection value;
an EGR valve (32, 42) capable of adjusting a flow rate of the EGR gas flowing in the EGR passage (4, 5);
a crank angle sensor (2a) capable of detecting a crank angle for calculating a rotational speed of the engine (2);
a temperature sensor (12a) capable of detecting the temperature of gas flowing into an engine (2) cylinder;
a pressure sensor (12b) capable of detecting the pressure of the gas flowing into the engine (2) cylinder;
a differential pressure sensor (34, 44) capable of detecting differential pressure between an upstream side and a downstream side of the EGR valve (32, 42); and
an ECU (6),
wherein the ECU (6) calculates a flow rate of the gas flowing into the engine (2) cylinder based on the rotational speed of the engine (2), the temperature detected by the temperature sensor (12a), and the pressure detected by the pressure sensor (12b),
wherein the ECU (6) calculates a flow rate of the EGR gas based on the differential pressure detected by the differential pressure sensor (34, 44) and a degree of opening of the EGR valve (32, 42),
wherein the ECU (6) calculates a difference between a reference value of an another flow rate of the new gas and the detection value, the reference value obtained by subtracting the calculated flow rate of the EGR gas from the calculated flow rate of the gas flowing into the engine (2) cylinder, and
wherein the ECU (6) judges whether the air flow meter (16) is acting abnormally when the calculated difference is equal to or more than a predetermined value.

2. A system for evaluating a possible abnormality in an engine (2) of claim 1,
wherein the EGR passage includes plural EGR passages (4, 5), and
wherein the ECU (6) judges whether the air flow meter (16) is acting abnormally only when any one of the plural EGR passages (4, 5) is operating.
